(19) Europäisches Patentamt / European Patent Office / Office européen des brevets

(11) **EP 3 273 285 A1**

(12) **EUROPEAN PATENT APPLICATION**
published in accordance with Art. 153(4) EPC

(43) Date of publication:
**24.01.2018 Bulletin 2018/04**

(21) Application number: **15885016.4**

(22) Date of filing: **18.03.2015**

(51) Int Cl.:
***G02B 21/00*** (2006.01)

(86) International application number:
**PCT/CN2015/074493**

(87) International publication number:
**WO 2016/145633 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **National Tsing Hua University Hsinchu 30013 (TW)**

(72) Inventors:
• **CHIANG, Ann-Shyn** Hsinchu (TW)
• **CHU, Shi-Wei** Taipei (TW)
• **HSU, Kuo-Jen** Taipei (TW)
• **LIN, Yen-Yin** Hsinchu (TW)
• **LIN, Yuan-Yao** Hsinchu (TW)

(74) Representative: **Zaboliene, Reda METIDA Law Firm Zaboliene and Partners Business center VERTAS Gyneju 16 01109 Vilnius (LT)**

(54) **OPTICAL SYSTEM FOR HIGH-SPEED THREE-DIMENSIONAL IMAGING**

(57) The present invention discloses an optical system for detecting a sample include a light source, one beam shaper, at least one lens, an image detecting module wherein the light source, one beam shaper, at least one lens are sequentially configured along a light path, wherein one beam shaper moves the focus along the light path back and forth so the light focused on the sample by the light source through one lens is focused onto different depths inside the sample, wherein the light source and the sample are placed at both sides of at least one lens. The image detection module is configured on a light path, and the sample is placed between at least one lens and the image detection module to capture images of different depths inside the sample.

100

FIG. 1

EP 3 273 285 A1

**Description**

FIELD OF THE INVENTION

The invention generally relates to an optical system, and, more particularly, to indicating an optical system for fast detecting the three-dimensional structure of sample.

BACKGROUND OF THE INVENTION

Laser scanning confocal microscope(LSCM) is the important device for observing biomedical images and its basic function is for enhancing the quality of the traditional microscope image. The imaging principle of said laser scanning confocal microscope is using laser light to replace traditional non-coherent light source based on said laser light which focuses energy on the focus more easily and reaches the size of diffraction limit in space. Said focuses may be moved laterally to form a focusing plane, and the zone outside said focusing plane is called a non-focusing plane. Using a pinhole as a spatial filter to acquire the structure information of focusing planes within the sample, and the focusing planes are further combined to form images by using computer algorithms.

Furthermore, the fluorescent materials(e.g. bioprobes) on the samples are emitted by the laser source and produce fluorescent lights, said focus of excitation light is introduced by the laser scanner to form focusing planes sequentially via point-by-point scanning, and moving the stage or objective lens axially may change the position of focusing planes in different depths inside the sample, in this way, the images of different depths inside the sample may be captured and further provided structure information. The system of laser scanning confocal microscope also has a sensor, and the function of sensor is to receive fluorescent messages form the scanner, said fluorescent messages further pass through said pinhole to block other non-focal-plane noise before entering said sensor for solving the traditional fluorescent microscope which is often jammed by non-focal-plane noise while in use, in addition to upgrading the quality of images, clear confocal images may also be acquired.

Confocal images are produced by said laser scanning confocal microscope and processed via computers, thus clear fluorescence images of cell or tissue inner structure are acquired, it may be known that changes(e.g. calcium concentration, pH value, changes in cell membrane potential etc.) of physiological signals and cell morphology inside cells or tissues.

Compared to general optical microscope and fluorescence microscope, laser scanning confocal microscope has the advantage of higher resolution ratio and sensitivity, decreasing noise jamming from fluorescence tests, and applies to long time image capture. In addition, laser scanning confocal microscope may also be used for tests of living cells or tissue and provide the better space and time analysis. After cells and tissue layer scanning, the three-dimensional stereoscopic image may be reconstructed and all kinds of signals are made intensity measurement analysis, thus the dynamic changes inside cells or tissues may be observed. Some optical systems use visible-light laser or two-photon technology to displace UV light for imaging and analyzing in order to decrease living cell damage from light beams. It doesn't need to design pinholes while using two-photon technology, because two-photon technology utilizes pulse compression in space and time so that the laser is able to emit effective fluorescence signals at focal location, thus said technology has the ability of optical sectioning to eliminate non-focal-plane signals, two-photon technology has larger penetration depth and lower light damage to the sample.

At the moment, whether laser scanning confocal microscope or two-photon scanning microscope, their imaging methods mainly scan sample's X-Y coordinate and then capture images along a direction of Z axis by multilayer scanning for acquiring X-Y coordinate plane images with different Z axis, then process images through computers, in addition to observing and recording the changes of sample space structure with time, said plurality of plane images also may be combined to acquire higher space resolution of stereoscopic images. However, said technology is limited that the scanning time needs to take about seconds to few minutes along the Z axis, hence it is hard to use the existing laser scanning microscopy technology to observe some three-dimensional biochemical reactions(e.g. calcium concentration, pH value, changes in cell membrane potential etc.) inside fluorescence labeling of samples or dynamic changes in samples. Therefore, although the high spatial resolution of images may be acquired by the existing scanning technology, the problem of the unavailable high time resolution images is not acquired and effectively solved yet.

SUMMARY OF THE INVENTION

The purpose of our invention provides an optical scanning system for fast detecting three-dimensional structure characterized by placing a beam shaper between a light source and lens, and said beam shaper has ability for adjustable focusing and cause said focus to move on the axis behind said lens to emit light signals from different depths inside the sample. The beam shaper may produce over hundreds of thousands of Hertz modulation and allow said focus to move axially and fast in hundred-micron range with the same frequency for acquiring rapidly different depths of light signals. At least the laser scanner allows the focus to complete one motion laterally in a pixel integration time and thus may form a dynamic optical record or stereoscopic image including hundred-micron depths on the axial direction. In one embodiment, the invention of the optical system may acquire high spatial and time resolution images(e.g. plane images or stereoscopic image) in a very short time.

In a first aspect of the invention, the invention of the optical system for fast detecting three-dimensional imaging comprises: a light source, a beam shaper, at least one lens and an image detecting module, wherein said light source, said beam shaper and at least one lens are sequentially configured along a light path, wherein one beam shaper moves the focus focusing onto an sample along the light path back and forth to focus light radiated from said light source through at least one lens onto different depths inside said sample for scanning, wherein said light source and said sample are placed at both sides of at least one lens; said image detecting module is configured on said light path, and said sample is placed between said at least one lens and said image detecting module to capture light signals emitted from focal planes of different depths inside the sample and combine a plurality of light signals to a plurality of plane images. In one embodiment, said invention of optical system may be further a confocal optical microscope system or a two-photon microscope system. In another embodiment, said system further has a beam splitter, said beam splitter is located at said light path and may be used to reflect plane images of different depths inside said sample into said image detecting module. In some embodiments, said light signals emitted by said sample may be fluorescence signals.

In one embodiment, said image detecting module captures said plurality of light signals from focuses of different depths inside said sample, and may combine said plurality of light signals to said plurality of plane images and arrange said plurality of plane images on different depths of the two-dimensional plane according to time sequence of capturing said plurality of light signals.

In a second aspect of the invention, the invention of system further includes an image processing module, said image processing module is coupled with said image detecting module and combines said plurality of plane images to a stereoscopic image. In one embodiment, while said system scans said sample continuously, said image processing module may combine said plurality of plane images to said plurality of stereoscopic images. In one embodiment, the user may observe dynamic changes(e.g. molecular activity, change of neuron potential, blood flow etc. in living cells) in the three-dimensional space inside said sample via said plurality of stereoscopic images.

In a third aspect of the invention, the invention of system further includes a database, said database is coupled with said image processing module and used for storing said achieved stereoscopic image or said plurality of plane images; In one embodiment, said achieved stereoscopic image or said plurality of plane images also may be used to compare with standard data in said database and produce comparison results; said stereoscopic image or said plurality of plane images may be known in actual positions relative to standard data according to comparison results.

## BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.

**Figure 1** is illustrated as the invention of the optical system for fast three-dimensional imaging according to one embodiment.
**Figure 2** is illustrated that light signals are acquired from different time sequence corresponding to different focal planes of images.
**Figure 3** is illustrated as the optical system with an image processing module according to one embodiment.
**Figure 4** is illustrated that said plurality of plane images are combined to a stereoscopic image.
**Figure 5** is illustrated as the optical system having a database according to one embodiment.

## DETAILED DESCRIPTION OF THE PRESENT INVENTION

An implementation of the invention is illustrated by the following specific embodiments, the person who is familiar with the technique may easily realize the efficiency and its advantages disclosed from the specification content. The invention also may use other specific embodiments to utilize and implement, each detail illustrated in the specification may be applied based on different needs and various kinds of modifications and alterations are not departed under the spirit of the invention.

Some sample embodiments of the invention will now be described in greater detail. Nevertheless, it should be recognized that the present invention can be practiced in a wide range of other embodiments besides those explicitly described, and the scope of the present invention is expressly not limited expect as specified in the accompanying claims.

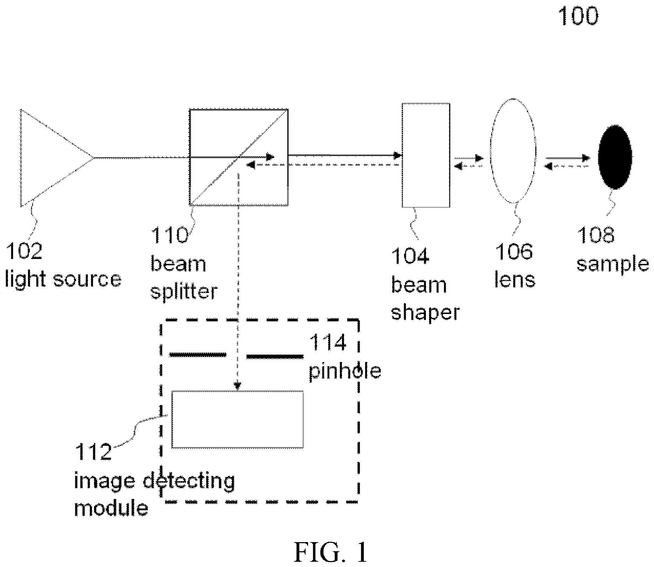

As shown in Figure 1, the invention of optical system for fast three-dimensional imaging comprises: a light source **102,** a beam shaper **104,** at least one lens **106** and an image detecting module **112,** wherein said light source **102,** said beam shaper **104** and at least one lens **106** are sequentially configured along a light path, wherein said beam shaper moves said focus focused on an sample along said light path back and forth to focus light radiated from said light source onto different depths inside said sample, wherein said light source **102** and said sample **108** are placed at both sides of at least one lens; said image detecting module is configured on said light path, and said sample is placed between said at least one lens and said image detecting module to capture light signals(for example, fluorescence signals) emitted from focal planes of different depths inside the sample. In one embodiment, said invention of said optical system may be further a confocal optical microscope system or a two-photon microscope system.

In another embodiment, said system further has a beam splitter **110,** said beam splitter is located at said light path and may be used to reflect plane images of different depths inside said sample into said image detecting module. In another embodiment, said light source is further visible light or UV light.

In the invention of the optical system, a pinhole **114** may further be placed between said image detecting module and said sample to filtrate non-focal-plane signals, focal-plane signals captured only further offer the ability of optical sectioning and upgrade image contrast. In one embodiment, while said pinhole is smaller, image signal-to-noise ratio is higher.

In one embodiment, because of said light source is affected by said beam shaper, the light radiated from said light source may focus on different depths inside said sample, thus said image detecting module may capture light signals of different depths inside said sample in a short time; in some embodiments, said three-dimensional structure inside said sample may be observed at different time points through scanning said sample continuously. In one embodiment, said depth range of detectable sample by this system is above 100 times than the traditional system without said beam shaper. According to the operating method of this invention, the invention of said system may scan, capture image information from different depths of said sample without moving said sample.

In one embodiment, said beam shaper causes the location of beam focus to bring back and forth along the light path, and said back and forth length of said beam focus location may correspond to different time sequence and produce said plurality of light signals. In one embodiment, if collecting said light signal at one point in time, the focus location of beam focus behind lens may be acquired and decided to respond to said relative depth of sample at one time.

In one embodiment, said image processing module may further convert said length of focus along said light path back or forth into said relative depth of sample in accordance with the following formula,

$$z_i = A_{out} \sin\left(\frac{t_i - nT}{T} + \Phi_0\right)$$

wherein $z_1$ is the voxel depth extracted from time $t_1$.

$$\Phi_0 = \frac{\pi}{2} - \frac{\pi}{T}(t_1 + t_2)$$ is a phase constant, $t_1$ and $t_2$ are time in contrast to the beam cycle(T), and $t_2$ minus $t_1$ is smaller than half of the light expansion cycle, two highest-correlation images is acquired at $t_1$ and $t_2$ (while the correlation is higher, that shows the degree of approximation of two plane images is higher).

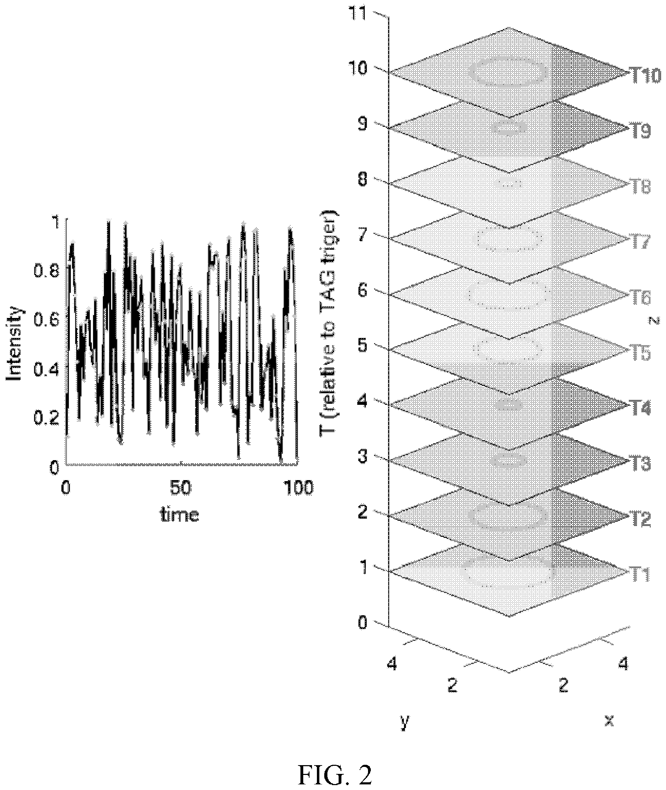

In one embodiment, as shown in Figure 2, said image detecting module receives said plurality of light signals produced by focuses in the three dimensional space in sequence, then said plurality of light signals are first combined to said plurality of plane images arranged in time phase according to the corresponding of time and two-dimensional space lateral scanning.

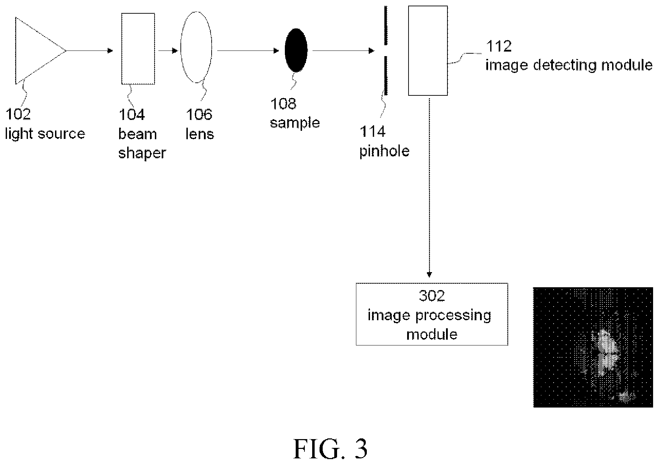

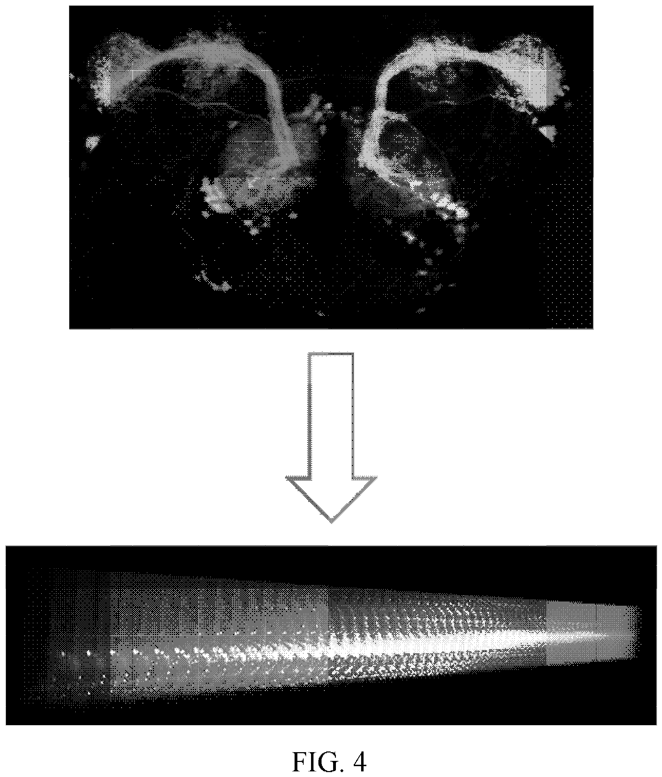

As shown in Figure 3, said system further includes an image processing module, and said image processing module is coupled with said image detecting module. While said image processing module captures said plurality of plane images from said image detecting module, said image processing module may combine said plurality of plane images to a stereoscopic image(referring to Figure 4) by calculating; in one embodiment, said image processing module may be used to store said plurality of plane images.

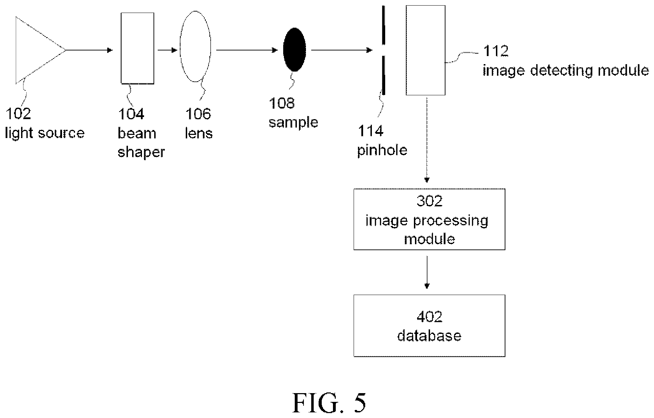

In one embodiment, as shown in Figure 5, this invention further has a database **402,** said database may be coupled with said image processing module for comparing and analyzing dynamic images; in one embodiment, said achieved stereoscopic image or said plurality of plane images also may be used to compare with standard data(e.g. Drosophila brain or other kinds of tissue samples) in said database; according to comparison results, said stereoscopic image or said plurality of plane images may be known in actual positions relative to standard data via comparison results. In another embodiment, said database may also further be coupled with said image detecting module for directly transmitting and storing said plurality of plane images into said database.

In one embodiment, while the location in said sample we want to observe could not be imaged, the user may regulate said at least one lens to adjust up or down along a direction of Z axis and capture images of different depths inside said sample.

Many of the methods are described in their most basic form, but processes may be added to or deleted from any of the methods and information may be added or subtracted from any of the described messages without departing from the basic scope of the present invention. It may be apparent to those skilled in the art that many further modifications and adaptations may be made. The particular embodiments are not provided to limit the invention but to illustrate it.

**Claims**

1. A optical system for fast three-dimensional imaging, comprising:

   a light source, a beam shaper and at least one lens, and said light source, said beam shaper and said lens sequentially configured along a light path,
   wherein said beam shaper moving said focus focusing onto an sample along said light path back and forth to focus light radiated from said light source onto different depths inside the sample, wherein said light source and said sample placed at both sides of said lens;

an image detecting module configured on said light path to capture light signals emitted from focal planes of different depths inside said sample.

2. The system of claim 1, said system may be a confocal optical microscope system or a two-photon microscope system.

3. The system of claim 1 or 2, wherein said system further includes an image processing module coupled with said image detecting module and combining said plurality of plane images to a stereoscopic image.

4. The system of claim 1, wherein said system further includes a beam splitter located at said light path and used to reflect different depths inside said sample.

5. The system of claim 1, wherein said system further includes a pinhole to filtrate non-focal-plane signals.

6. The system of claim 3, wherein said image processing module may further be used to convert said length of focus along said light path back or forth into said relative depth of sample.

7. The system of claim 1 or 2, wherein said system further includes a database coupled with said image detecting module for storing said plurality of plane images.

8. The system of claim 3, wherein said system further includes a database coupled with said image processing module for storing said stereoscopic image.

9. The system of claim 1, wherein said at least one lens may be adjusted up or down along a direction of Z axis and capture images of different depths inside said sample.

10. The system of claim 1, wherein said light source is further visible light or UV light.

11. The system of claim 1 or 8, wherein said sample depths range detected by said system is 1~200 m.

100

102
light source

110
beam
splitter

104
beam
shaper

106
lens

108
sample

114
pinhole

112
image detecting
module

FIG. 1

FIG. 2

102
light source

104
beam
shaper

106
lens

108
sample

114
pinhole

112
image detecting module

302
image processing
module

FIG. 3

FIG. 4

102
light source

104
beam
shaper

106
lens

108
sample

114
pinhole

112
image detecting module

302
image processing
module

402
database

FIG. 5

# INTERNATIONAL SEARCH REPORT

| International application No. |
| --- |
| **PCT/CN2015/074493** |

## A. CLASSIFICATION OF SUBJECT MATTER

G02B 21/00 (2006.01) i

According to International Patent Classification (IPC) or to both national classification and IPC

## B. FIELDS SEARCHED

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNKI; CNPAT; WPI; EPODOC: optical microscopy, lsm700, focus, beam shaping, (three dimensional) OR 3D, imaging, Z AXIS, confocal, laser, CLSM, microscopy, two photo excitat+

## C. DOCUMENTS CONSIDERED TO BE RELEVANT

| Category* | Citation of document, with indication, where appropriate, of the relevant passages | Relevant to claim No. |
| --- | --- | --- |
| Y | TW 200928427 A (NATIONAL TSING HUA UNIVERSITY), 01 July 2009 (01.07.2009), description, page 7, paragraph 3 to page 8, paragraph 2, and figures 1-4 | 1-11 |
| Y | CN 101419223 A (MMI GMBH MOLECULAR MACHINES & INDUSTRIES), 29 April 2009 (29.04.2009), description, page 10, penultimate paragraph, and figure 1 | 1-11 |
| A | CN 101403680 A (SHANGHAI INSTITUTE OF OPTICS AND FINE MECHANICS, CHINESE ACADEMY OF SCIENCES), 08 April 2009 (08.04.2009), the whole document | 1-11 |
| A | CN 101586947 A (BEIJING INSTITUTE OF TECHNOLOGY), 25 November 2009 (25.11.2009), the whole document | 1-11 |
| A | US 2010177190 A1 (CHIANG, A.S. et al.), 15 July 2010 (15.07.2010), the whole document | 1-11 |
| A | CN 102436061 A (LIU, Cheng), 02 May 2012 (02.05.2012), the whole document | 1-11 |
| A | US 2005163390 A1 (CHIANG, A.S.), 28 July 2005 (28.07.2005), the whole document | 1-11 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 November 2015 (18.11.2015) | **03 December 2015 (03.12.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MIU, Gujin** Telephone No.: (86-10) **62413458** |
| --- | --- |

Form PCT/ISA/210 (second sheet) (July 2009)

## INTERNATIONAL SEARCH REPORT
### Information on patent family members

International application No.

**PCT/CN2015/074493**

| Patent Documents referred in the Report | Publication Date | Patent Family | Publication Date |
|---|---|---|---|
| TW 200928427 A | 01 July 2009 | US 2009161210 A1 | 25 June 2009 |
| CN 101419223 A | 29 April 2009 | US 2009140169 A1 | 04 June 2009 |
| | | JP 2009103701 A | 14 May 2009 |
| | | EP 2053377 A1 | 29 April 2009 |
| CN 101403680 A | 08 April 2009 | CN 101403680 B | 26 January 2011 |
| CN 101586947 A | 25 November 2009 | CN 101586947 B | 12 January 2011 |
| US 2010177190 A1 | 15 July 2010 | None | |
| CN 102436061 A | 02 May 2012 | CN 102436061 B | 12 June 2013 |
| US 2005163390 A1 | 28 July 2005 | None | |

Form PCT/ISA/210 (patent family annex) (July 2009)